# FASCICULE DE BREVET EUROPEEN

(11) **EP 1 867 467 B1**
(45) Date de publication et mention de la délivrance du brevet: **15.04.2009**
(21) Numéro de dépôt: 07109119.3
(22) Date de dépôt: 29.05.2007
(51) Int. Cl.: B29D 30/28, B29D 30/20

(54) **Méthode de pose de nappe de renfort carcasse**
Verfahren zum Auflegen einer verstärkten Karkassenlage.
Method of applying a carcass reinforcing ply.

(30) Priorité: 16.06.2006 FR 0605569
(43) Date de publication de la demande: 19.12.2007
(73) Titulaire: Société de Technologie Michelin, 63000 Clermont-Ferrand (FR); Michelin Recherche et Technique S.A., 1763 Granges-Paccot (CH)
(72) Inventeur: Macheffe, Daniel, 63960 Veyre Monton (FR); Deboeuf, Michel, 63270 Vic le Comte (FR)
(74) Mandataire: Lasson, Cédric Y. M.

(56) Documents cités:
- EP-A1- 1 625 931
- US-A- 4 052 246
- US-A- 4 526 647
- US-A- 4 844 768

## Description

L'invention concerne le domaine de la fabrication de pneumatiques destinés à équiper les véhicules automobiles, et plus particulièrement la fabrication de pneumatiques dits autoporteurs capables de permettre au véhicule de rouler à pression réduite sur une distance donnée.

Ces pneumatiques se caractérisent en ce qu'ils comportent des renforts situés dans les flancs du pneumatique qui portent la charge lorsque la pression d'air dans le pneumatique est voisine d'une pression nulle. Ces renforts de flancs se présentent sous la forme de profilés caoutchoutiques de forte épaisseur en comparaison des autres profilés disposés dans le pneumatique dans cette zone, dont la composition est adaptée, et qui sont placés généralement entre la gomme d'étanchéité intérieure et la nappe de renfort carcasse.

La fabrication d'une ébauche de pneumatique de type autoporteur sur des moyens classiques de fabrication consiste, de manière connue, à déposer par enroulement sur un tambour rotatif de forme généralement cylindrique les différents profilés qui constituent l'ébauche du pneumatique en commençant par la gomme d'étanchéité, puis à poser successivement les profilés de renfort de flanc de forte épaisseur, la nappe de renfort carcasse, les profilés de bourrage des zones basse et les anneaux de renfort talon ; le reste des composants ne se différenciant pas des composants utilisés de manière classique dans les pneumatiques.

Dans un pneumatique dit à carcasse radial, la nappe de renfort carcasse est constituée de fils, textiles ou métalliques, enrobés dans un mélange caoutchoutique. Les fils sont orientés axialement, perpendiculairement à la direction de la pose. Le mélange caoutchoutique forme des ponts de gomme dans l'espace compris entre deux fils.

La nappe de renfort carcasse ou les profilés se présentent généralement sous forme de tronçon de bande ou de nappe, délivrés par des serveurs appropriés disposés en vis-à-vis du tambour d'assemblage.

Il est important, pendant tout ce processus d'assemblage, de faire en sorte que les produits adhèrent entre eux, et d'éviter d'emprisonner de l'air entre les couches de produit de manière à ne pas pénaliser les performances du pneumatique.

Un problème spécifique lié à l'assemblage des pneumatiques dits autoporteurs réside dans la dépose de la nappe de renfort carcasse, généralement radiale, en raison de la forte épaisseur des profilés de renfort de flanc. Il en résulte une difficulté pour évacuer l'air piégé entre les profilés de renfort flanc, la nappe de renfort carcasse et la gomme d'étanchéité. De plus, la variation des circonférences de pose entraîne une difficulté supplémentaire pour maîtriser la radialité des fils de la nappe de renfort carcasse.

Ce problème, connu de l'homme du métier, est généralement résolu en modifiant le profil du tambour d'assemblage sur lequel sont déposés les composants. Des gorges circonférentielles sont aménagées dans la zone où sont déposées les profilés de renfort flanc de manière à faire en sorte que le profil méridien du tambour soit sensiblement rectiligne au moment de la dépose de la nappe de renfort carcasse.

Une solution de ce type est décrite à titre d'exemple dans la publication US 5 591 288 ou encore dans la publication EP 1 625 931.

Bien que les avantages liés à ce type de solution ne soient plus à démontrer, il convient toutefois d'observer que la mise en oeuvre de tambours comportant ces gorges circonférentielles nécessite de modifier profondément les tambours conventionnels de forme généralement cylindrique, ou de développer des tambours spécifiques pour la réalisation de ce type de pneumatique comme cela est décrit, à titre d'exemple, dans les publications US 6 863 106 ou US 6 769 468. De plus ces modifications nécessitent des moyens permettant de modifier la distance axiale entre les gorges, en fonction de la dimension de pneumatique à assembler, ce qui accroît d'autant le coût de ce type de tambour.

L'invention a pour objet de proposer une solution au problème de la pose de la nappe de renfort carcasse des pneumatiques autoporteurs, dans laquelle il n'est pas nécessaire de modifier le tambour d'assemblage, et qui peut s'adapter sur les moyens de fabrication utilisés à la réalisation de tous types de pneumatique. Dans ce cas, le tambour d'assemblage ne comporte pas de gorges latérales au droit desquelles les profilés de forte épaisseur sont déposés, ce qui revient à dire que les génératrices du tambour sont sensiblement rectilignes et disposées à une même distance de l'axe de rotation du tambour de manière à définir une surface de réception sensiblement cylindrique.

Le problème à résoudre dans ce contexte est lié au fait que la nappe de renfort carcasse doit être déposée sur un profil méridien présentant des variations radiales importantes. En effet, après avoir déposé une épaisseur de gomme d'étanchéité intérieure on obtient une première surface de pose généralement cylindrique de section circulaire de rayon R₁ et qui est sensiblement plane. Le développement circonférentiel de cette surface est sensiblement égal à 2xπxR₁.

Les profilés de renfort flanc sont posés sur cette première surface de pose, et sont axialement distants l'un de l'autre. Si l'on désigne par e l'épaisseur de ces profilés, le dos des profilés se trouve placé à un rayon R₂ dans lequel R₂ = R₁ + e. Le développement circonférentiel au dos des profilés est sensiblement égal à 2xπxR₂, et ce développement est sensiblement plus élevé que le développement mesuré au niveau de la première surface de pose. On considèrera que les renforts flancs ont une forte épaisseur lorsque le rapport R2/R1> 1,05.

La ligne méridienne dessine alors un profil galbé dont la distance à l'axe de rotation du tambour est au minimum égale à R₁, et au maximum est égale à R₂, qui représente la somme de R₁ + e, et où le rapport R_{2/}/R₁ est supérieur ou égal à 1,05.

Pour que les fils de la nappe de renfort carcasse demeurent parallèles entre eux et à la direction axiale une fois la nappe de renfort posée sur le profil formé par la première surface de pose et par les profilés de renfort flanc il convient de jouer sur l'élasticité des ponts de gomme, en les étirant, de manière à compenser les variations de développement liées aux différences de rayon entre le sommet des profilés qui est au rayon R₂ et la partie centrale qui est au rayon R₁. La méthode de pose par enroulement de la nappe de renfort carcasse selon l'invention se caractérise en ce que l'on délivre la nappe C en direction de la surface du tambour à une vitesse linéaire sensiblement égale à la vitesse circonférentielle de la première surface de pose, tout en exerçant sur la nappe de renfort C, à l'aide d'un rouleau d'application déformable, une pression dans la direction radiale le long d'une ligne méridienne correspondant sensiblement aux points de mise en contact de la nappe avec la première surface de pose.

Le rouleau d'application a pour effet de laminer la nappe de renfort carcasse, en particulier au niveau du dos des profilés, et de forcer les ponts de gomme situés au droit de ces profilés de renfort flanc à se distendre de manière à épouser la circonférence de pose au dos des profilés de renfort flanc, et à ce que les fils de renfort demeurent alignés et parallèles à la direction axiale.

Pour obtenir cet effet de laminage il est important, comme on le verra par la suite d'ajuster la pression exercée par le rouleau d'application et, si nécessaire de disposer un rouleau de laminage en amont du rouleau d'application pour augmenter les effets recherchés, lorsque l'épaisseur e des profilés de renfort flanc devient très important.

Les moyens utilisés pour mettre en oeuvre la méthode sont des moyens connus et largement utilisés dans l'industrie du pneumatique. La méthode selon l'invention a pour objet de proposer une forme originale de collaboration entre ces moyens permettant de s'affranchir de la nécessité de modifier les tambours d'assemblage classiques.

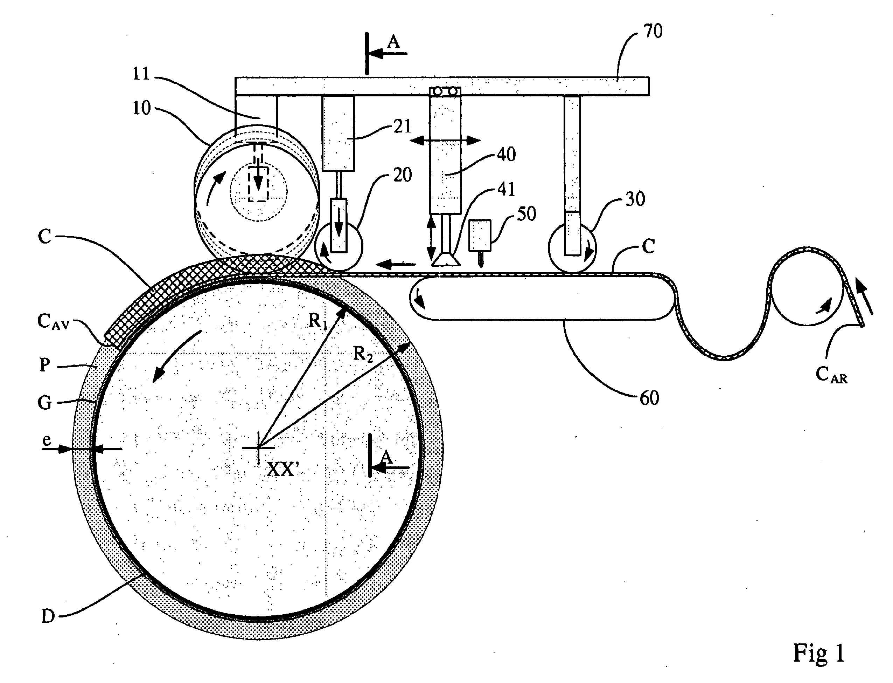

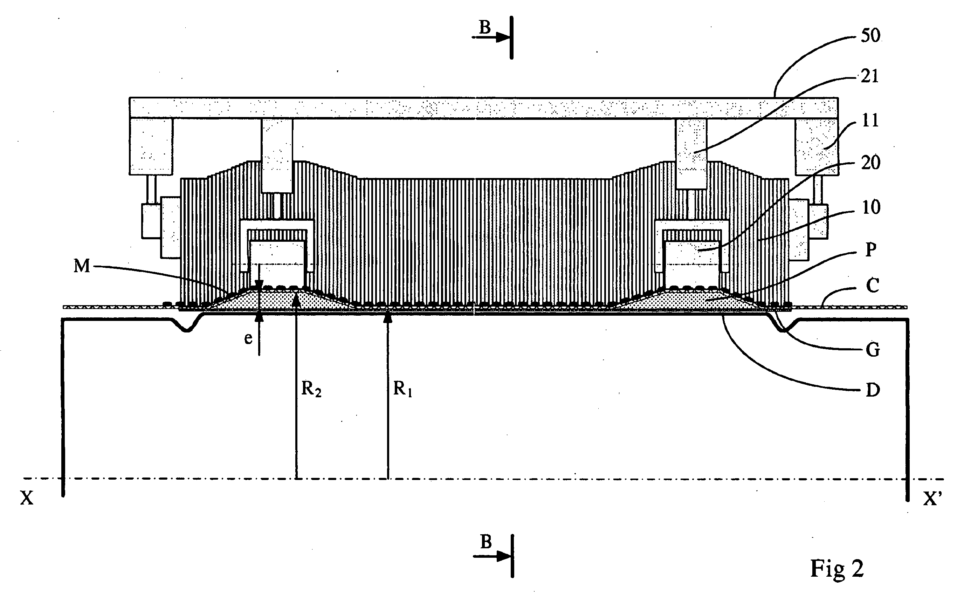

La description qui suit s'appuie sur les figures 1 et 2 qui permettent d'illustrer un mode de réalisation préférentiel de l'invention dans lesquelles,
- la figure 1 représente une vue schématique selon une direction axiale B-B d'un dispositif de pose permettant de mettre en oeuvre le procédé selon l'invention,
- la figure 2 représente une vue schématique selon une direction longitudinale A-A de ce même dispositif.

Sur la figure 1 on distingue un tambour d'assemblage D de forme cylindrique de section circulaire d'axe XX'. Sur ce tambour ont été déposés une gomme d'étanchéité intérieure G et des profilés P d'épaisseur e. La première surface de pose a un rayon R₁.

La figure 2 montre les deux profilés de renfort flanc P déposés axialement distants l'un de l'autre. Le dos des profilés se situe à un rayon R₂ de l'axe XX'.

La description qui suit est fondée sur l'assemblage d'un pneumatique comportant une architecture simple formée d'une gomme d'étanchéité, de deux profilés de renfort flanc et d'une nappe de renfort carcasse.

Il va de soi que la méthode selon l'invention peut s'appliquer tout aussi bien à une architecture comprenant plusieurs nappes de renfort carcasse et plusieurs profilés de renfort flanc, dés lors que le profil de pose de la ou des nappes de renfort carcasse présente des variations de rayon de pose importants.

Sur la figure 1, la nappe de renfort carcasse C est visualisée sous la forme d'un tronçon de nappe comportant un front avant C_{AV} et un front arrière C_{AR}. Le front avant de la nappe C_{AV} est posé sur le tambour et le front arrière C_{AR} est engagé dans le serveur de nappe schématisé sous la forme d'un tapis d'alimentation 60.

La figure 2 permet de visualiser le profil galbé du méridien M de la surface de pose sur laquelle est déposée la nappe de renfort carcasse C et représenté par une ligne en pointillé gras. On remarque que le dos des profilés se situe à un rayon R2 de l'axe de rotation XX' du tambour et que la partie centrale sur laquelle aucun profilé supplémentaire n'a été déposé est restée au rayon R1. Le rapport R₂/R₁ est supérieur à 1,05. En pratique ce rapport n'excède pas 1,15.

Les différentes flèches indiquent la direction des mouvements des organes permettant de déposer la nappe de renfort lorsque la nappe est amenée dans la direction de pose. En considérant la direction longitudinale, la nappe est dirigée dans le sens de pose depuis l'amont vers l'aval.

Un châssis 70 supporte un rouleau d'application déformable dans la direction radiale de type multidisques 10 par l'intermédiaire d'un vérin d'application 11. Le point d'application du rouleau 10 correspond sensiblement au point de mise en contact de la nappe de renfort C avec la première surface de rayon R₁. Le rouleau d'application 10 est doté d'un mouvement de monte et baisse pour venir à la demande en contact avec la surface de pose. La largeur du rouleau d'application 10 correspond sensiblement à la largeur de la nappe C comme cela est illustré à la figure 2.

Le rouleau d'application déformable représenté dans l'exemple de mise en oeuvre du procédé est un rouleau d'emploi courant du type multidisques, formé d'un ensemble de disques juxtaposés entre eux et mobiles les uns par rapport aux autres dans la direction radiale. Un système pneumatique force chacun des disques à se déplacer dans la direction radiale jusqu'à ce que le disque vienne en contact avec le profil de pose.

De manière tout à fait équivalente, il est possible d'utiliser un rouleau d'application en mousse dont l'élasticité est adaptée pour épouser également la forme du profil de pose. Ce type de rouleau est particulièrement adapté lorsque l'épaisseur du profilé P est relativement faible.

Le tapis d'alimentation 60 du serveur délivre la nappe C sur le tambour depuis un moyen de stockage (non représenté). Un galet de synchronisation 30 permet de mesurer la vitesse linéaire du tapis d'alimentation 60. Ce galet de synchronisation peut avantageusement être remplacé par un rouleau de manière à éviter tout glissement entre le tapis 60 et la nappe C.

De cette manière, la vitesse de rotation du tambour étant constante, et le rayon R₁ de la première surface étant connu, il est possible de réguler la vitesse du tapis d'alimentation 60 de manière à ce que la vitesse linéaire de ce tapis soit égale à la vitesse circonférentielle de la première surface de rayon R₁.

Un outil de coupe 50 est disposé en aval du galet de synchronisation 30 de manière à sectionner la nappe de renfort C pour obtenir un tronçon de nappe de la longueur désirée correspondant au développement de la première surface et qui est sensiblement égal à 2xπxR₁.

Il est également possible, sans sortir du cadre de l'invention, et dans certaines configurations d'appliquer une très légère tension de pose, en conférant au tapis d'alimentation 60 une vitesse très légèrement inférieure à la vitesse circonférentielle de la première surface de pose de manière à favoriser l'application de la nappe de renfort sur la première surface de pose. Cet effet peut être obtenu avec une diminution de la vitesse linéaire du tapis d'alimentation 60, généralement inférieure de 2% à la vitesse circonférentielle de la première surface de pose.

Le point d'application du rouleau 10 se situe au niveau des points de rencontre entre le plan de la nappe C et la première surface. On observe en effet que l'effet de laminage diminue lorsque le rouleau est placé en aval de ces points de contact.

Le rouleau d'application 10 exerce une pression dans la direction radiale sur la nappe de renfort C. La pression d'application doit être suffisamment élevée pour engendrer le phénomène de laminage évoqué ci-dessus, sans toutefois déformer le profilé P. Cette pression d'application peut varier de 0,1 MPa à 0,5 MPa, en fonction de l'épaisseur du produit à poser. De manière courante, pour une dimension de 16", et un diamètre du rouleau d'application de 100 mm, on applique une pression de 0,3 Mpa pour un profilé P ayant une épaisseur de 12mm.

On constate néanmoins que plus l'épaisseur e du profilé P est importante, plus il est nécessaire d'exercer une pression d'application élevée à l'aide du rouleau 10.

Pour résoudre cette difficulté, il est proposé, toujours dans le cadre de l'invention, de disposer des rouleaux de laminage 20 en amont du rouleau d'application. Les rouleaux de laminage 20 sont supportés par le châssis 70 par l'intermédiaire de vérins 21. Ces rouleaux de laminage 20 exercent une pression sur la nappe au droit du dos des profilés P comme cela est illustré à la figure 2. Pour les mêmes raisons que précédemment les rouleaux sont disposés, dans la direction longitudinale, sur la ligne méridienne correspondant sensiblement aux points de mise en contact de la nappe avec le dos des profilés P.

La pression d'application peut varier de 1 MPa à 10 MPa. De manière préférentielle la pression exercée par le rouleau de laminage au niveau de la nappe varie entre 2 Mpa et 6 Mpa.

La pose du front arrière de la nappe C_{AR} peut également poser problème, en ce que lorsque ledit front arrière quitte le tapis d'alimentation 60 il demeure un espace libre, entre le tapis d'alimentation et le tambour, sur le trajet duquel il n'est pas possible de maîtriser la vitesse linéaire de la nappe en chacun des points et par voie de conséquence, de maintenir les fils de la nappe parallèles entre eux et à la direction axiale.

A cette fin, et toujours dans le cadre de l'invention, il est proposé de disposer un transporteur 40, se déplaçant dans la direction longitudinale, et muni de moyens aptes à saisir le front arrière C_{AR} de la nappe P sur toute la largeur de la nappe. Ces moyens peuvent être formés, selon la nature des fils de renfort, par un ensemble de ventouses 41 ou encore par des aimants, disposés en ligne, parallèlement à la direction axiale, ou encore perpendiculairement à la direction longitudinale.

On achève la pose de la nappe de renfort carcasse en saisissant le front arrière C_{AR} de la nappe de renfort carcasse C à l'aide des moyens de saisie du transporteur et on ajuste la vitesse linaire du transporteur de manière à ce qu'elle soit sensiblement égale à la vitesse circonférentielle mesurée sur la première circonférence. On dépose le front arrière C_{AR} de la nappe sur le tambour D au niveau de la ligne méridienne correspondant sensiblement aux points de mise en contact de la nappe avec le dos des profilés P. On achève la pose en faisant passer le front arrière C_{AR} et le front avant C_{AV} de la nappe sous le rouleau d'application 10 de manière à réaliser l'aboutage des deux fronts de nappe.

On observe qu'en maîtrisant la vitesse de pose du front arrière au plus prés de la surface de pose il est possible de conserver une bonne radialité des fils de renfort contenus dans la nappe et que l'aboutage du front arrière C_{AR} et du front avant C_{AV} peut se faire en contrôlant le nombre de fils de superposition conformément aux tolérances de fabrication imposées dans cette zone.

Le transporteur 40 peut également être utilisé pour démarrer l'opération de pose, et faire franchir au front de nappe avant C_{AV} l'espace séparant l'extrémité du tapis d'alimentation 60 de la surface de pose. Le front de nappe C_{AV} est alors déposé directement sur la surface de pose, sensiblement au niveau de la zone de contact du rouleau d'application 10. Ce moyen permet de garantir que les fils de renfort du front de nappe C_{AV} sont parfaitement alignés dans la direction axiale. Une fois le front de nappe déposé sur la surface de pose, le transporteur est ramené en amont, et le rouleau d'application 10 est abaissé sur la surface de pose.

De manière à préserver au mieux la radialité des fronts de nappe avant et arrière (C_{AV} , C_{AR}), un résultat satisfaisant a été obtenu en déposant successivement la partie de la nappe située au centre, puis la partie de la nappe située axialement aux deux extrémités. Ce résultat peut être obtenu aisément en relâchent dans l'ordre voulu les moyens de saisie 41.

Ce mode opératoire présente également l'avantage de permettre une meilleure évacuation de l'air compris entre les deux profilés de forte épaisseur P.

Le mode préférentiel de réalisation de l'invention décrit dans la présente demande comporte un transporteur 40. Toutefois il est possible de remplir une fonction similaire à l'aide de tout moyen apte à réduire le parcours libre des fronts de nappe (C_{AV}, C_{AR}). Ce résultat peut être obtenu par exemple en disposant l'extrémité aval du tapis d'alimentation 60 au plus prés de la surface de pose du tambour d'assemblage. De cette manière, les fronts avant et arrière quittent le tapis d'alimentation au plus près des points d'application..

Selon cet arrangement, les moyens de coupe 50 sont alors disposés en amont des galets de synchronisation 30.

Le pilotage des moyens de pose peut être réalisé sans difficulté par un moyen automatique conformément aux procédés connus dans l'industrie du pneumatique.

## Revendications

1. Méthode de pose par enroulement d'une nappe de renfort carcasse (C) sur un tambour rotatif (D) généralement cylindrique de section circulaire de rayon (R_{1,}) définissant une première surface de pose dont les génératrices sont sensiblement rectilignes, sur laquelle ont été déposés, axialement distants l'un de l'autre, des profilés (P) d'épaisseur e, de sorte que la ligne méridienne (M) dessine un profil galbé dont la distance à l'axe de rotation du tambour est au minimum égale à R₁, et au maximum est égale à R₂ qui représente la somme de R₁ + e, et où le rapport R_{2/}/R₁ est supérieur ou égal à 1,05, dans laquelle méthode on délivre la nappe (C) en direction de la surface du tambour à une vitesse linéaire sensiblement égale à la vitesse circonférentielle de la première surface de pose, tout en exerçant sur la nappe de renfort (C), à l'aide d'un rouleau d'application à profil déformable (10), une pression dans la direction radiale le long d'une ligne méridienne (M) correspondant sensiblement aux points de mise en contact de la nappe avec la première surface de pose.

2. Méthode de pose selon la revendication 1, dans laquelle le rouleau d'application (10) a une largeur dans la direction axiale correspondant sensiblement à la largeur de la nappe de renfort carcasse (C).

3. Méthode de pose selon l'une des revendications 1 ou 2, dans laquelle le rouleau d'application est du type rouleau multidisques (10).

4. Méthode de pose selon l'une des revendications 1 ou 2, dans laquelle le rouleau d'application est du type rouleau mousse.

5. Méthode selon l'une des revendications 1 à 4, dans laquelle la pression exercée par le rouleau d'application (10) sur la nappe de renfort C est comprise entre 0,1 Mpa et 0,5 Mpa.

6. Méthode de pose selon l'une des revendications 1 à 5 dans laquelle on exerce également une pression radiale sur la nappe de renfort (C) à l'aide de rouleaux de laminage (20) disposés axialement au droit des profilés (P), et placés en amont du rouleau d'application (10) au niveau d'une ligne méridienne correspondant sensiblement aux points de mise en contact de la nappe avec le dos des profilés (P).

7. Méthode de pose selon la revendication 6, dans laquelle la largeur des rouleaux de laminage (20) est sensiblement égale à la largeur du sommet des profilés (P).

8. Méthode de pose selon l'une des revendications 6 ou 7, dans laquelle la pression d'application des rouleaux de laminage (20) est comprise entre 1 Mpa et 10 Mpa.

9. Méthode de pose selon l'une des revendications 6 ou 7, dans laquelle la pression d'application des rouleaux de laminage (20) est comprise entre 2 Mpa et 6 Mpa.

10. Méthode de pose selon l'une des revendications 1 à 9 dans laquelle, pour débuter la pose de la nappe de renfort carcasse :
- on saisit le front avant (C_{AV} ) de la nappe de renfort carcasse (C) à l'aide d'un transporteur (40) apte à maintenir les fils de renfort carcasse parallèle à la direction axiale,
- on dépose le front avant de la nappe sur le tambour (D) au niveau d'une ligne méridienne correspondant sensiblement à la zone de contact du rouleau d'application (10) avec la première surface de pose,
- puis on abaisse le rouleau d'application (10) sur la surface de pose après avoir retiré le transporteur.

11. Méthode de pose selon l'une des revendications 1 à 9 dans laquelle, pour achever la pose de la nappe de renfort carcasse :
- on saisi le front arrière (C_{AR} ) de la nappe de renfort carcasse (C) à l'aide d'un transporteur apte à maintenir les fils de renfort carcasse parallèle à la direction axiale, et dont la vitesse linéaire est sensiblement égale à la vitesse circonférentielle mesurée sur la première circonférence,
- on dépose le front arrière (C_{AR} ) de la nappe sur le tambour (D) au niveau de la ligne méridienne correspondant sensiblement aux points de mise en contact de la nappe avec le dos des profilés (P),
- on fait passer le front arrière (C_{AR} ) et le front avant (C_{AV}) de la nappe sous le rouleau d'application (10) de manière à réaliser l'aboutage des deux fronts de nappe.

## Claims

1. A method of laying by winding a carcass reinforcement ply (C) on a generally cylindrical rotary drum (D) of circular section of radius (R₁) defining a first laying surface, the generatrices of which are substantially rectilinear, on which have been deposited, axially spaced apart from one another, profiled elements (P) of thickness e, such that the meridian line (M) describes a cambered profile, the distance of which from the axis of rotation is at least equal to R₁, and at most is equal to R₂, which represents the total of R₁ + e, and in which the ratio R_{2/}/R₁ is greater than or equal to 1.05, **characterised in that** the ply (C) is delivered towards the surface of the drum at a linear speed which is substantially equal to the circumferential speed of the first laying surface, while exerting on the reinforcement ply (C), using an application roller of deformable profile (10), a pressure in the radial direction along a meridian line (M) corresponding substantially to the points at which the ply is placed in contact with the first laying surface.

2. A laying method according to Claim 1, in which the application roller (10) has a width in the axial direction corresponding substantially to the width of the carcass reinforcement ply (C).

3. A laying method according to one of Claims 1 or 2, in which the application roller is of the multidisc roller (10) type.

4. A laying method according to one of Claims 1 or 2, in which the application roller is of the foam roller type.

5. A method according to one of Claims 1 to 4, in which the pressure exerted by the application roller (10) on the reinforcement ply C is between 0.1 MPa and 0.5 MPa.

6. A laying method according to one of Claims 1 to 5, in which a radial pressure is also exerted on the reinforcement ply (C) using laminating rollers (20) arranged axially level with the profiled elements (P), and placed upstream of the application roller (10) at the level of a meridian line corresponding substantially to the points at which the ply is placed in contact with the back of the profiled elements (P).

7. A laying method according to Claim 6, in which the width of the laminating rollers (20) is substantially equal to the width of the crown of the profiled elements (P).

8. A laying method according to one of Claims 6 or 7, in which the application pressure of the laminating rollers (20) is of between 1 MPa and 10 MPa.

9. A laying method according to one of Claims 6 or 7, in which the application pressure of the laminating rollers (20) is of between 2 MPa and 6 MPa.

10. A laying method according to one of Claims 1 to 9 in which, to start the laying of the carcass reinforcement ply:
- the front edge (C_{AV}) of the carcass reinforcement ply (C) is gripped by means of a transporter means (40) capable of keeping the carcass reinforcement cords parallel to the axial direction,
- the front edge of the ply is arranged on the drum (D) at the level of a meridian line corresponding substantially to the zone of contact of the application roller (10) with the first laying surface,
- then the application roller (10) is lowered onto the laying surface once the transporter means has been removed.

11. A laying method according to one of Claims 1 to 9, in which, to finish off the laying of the carcass reinforcement ply:
- the rear edge (C_{AR}) of the carcass reinforcement ply (C) is gripped by means of a transporter means capable of keeping the carcass reinforcement cords parallel to the axial direction, and the linear speed of which is substantially equal to the circumferential speed measured on the first circumference,
- the rear edge (C_{AR}) of the ply is deposited on the drum (D) at the level of the meridian line corresponding substantially to the points at which the ply is placed in contact with the back of the profiled elements (P),
- the rear edge (C_{AR}) and the front edge (C_{AV}) of the ply are passed beneath the application roller (10) so as to effect butt-jointing of the two ply edges.

## Patentansprüche

1. Verfahren zum Auflegen durch Aufwickeln einer Karkassenverstärkungs-Kordlage (C) auf eine im Allgemeinen zylindrische, rotierende Trommel (D) mit im Wesentlichen kreisförmigem Querschnitt mit Radius (R₁), die eine erste Auflegeoberfläche definiert, deren Erzeugende im Wesentlichen geradlinig sind und auf der axial voneinander beabstandet Profile (P) mit der Dicke e angeordnet worden sind, derart, dass die Meridianlinie (M) in einem geschwungenen Profil verläuft, dessen Abstand zur Drehachse der Trommel mindest gleich R₁ und höchstens gleich R₂ ist, wobei R₂ die Summe R₁ + e repräsentiert und wobei das Verhältnis R₂/R₁ größer oder gleich 1,05 ist, wobei in dem Verfahren die Kordlage (C) in Richtung der Trommeloberfläche mit einer Lineargeschwindigkeit abgegeben wird, die im Wesentlichen gleich der Umfangsgeschwindigkeit der ersten Auflegeoberfläche ist, wobei mit Hilfe einer Druckwalze mit verformbarem Profil (10) auf die Verstärkungskordlage (C) ständig ein Druck in radialer Richtung längs einer Meridianlinie (M), die im Wesentlichen Kontaktherstellungspunkten zwischen der Kordlage und der ersten Auflegeoberfläche entspricht, ausgeübt wird.

2. Auflegeverfahren nach Anspruch 1, wobei die Druckwalze (10) in axialer Richtung eine Breite hat, die im Wesentlichen der Breite der Karkassenverstärkungs-Kordlage (C) entspricht.

3. Auflegeverfahren nach einem der Ansprüche 1 oder 2, wobei die Druckwalze vom Typ Mehrscheibenwalze (10) ist.

4. Auflegeverfahren nach einem der Ansprüche 1 oder 2, wobei die Druckwalze vom Typ Schaumstoffwalze ist.

5. Verfahren nach einem der Ansprüche 1 bis 4, wobei der durch die Druckwalze (10) auf die Verstärkungskordlage (C) ausgeübte Druck im Bereich von 0,1 MPa bis 0,5 MPa liegt.

6. Auflegeverfahren nach einem der Ansprüche 1 bis 5, wobei auf die Verstärkungskordlage (C) mit Hilfe von Laminierungswalzen (20), die axial am Ort der Profile (P) angeordnet und stromaufseitig von der Druckwalze (10) auf Höhe einer Meridianlinie, die im Wesentlichen Kontaktherstellungspunkten zwischen der Kordlage und dem Rücken der Profile (P) entspricht, angeordnet sind, auch ein radialer Druck ausgeübt wird.

7. Auflegeverfahren nach Anspruch 6, wobei die Breite der Laminierungswalzen (20) im Wesentlichen gleich der Breite der Oberseite der Profile (P) ist.

8. Auflegeverfahren nach einem der Ansprüche 6 oder 7 wobei der Druck, der durch die Laminierungswalzen (20) ausgeübt wird, im Bereich von 1 MPa bis 10 MPa liegt.

9. Auflegeverfahren nach einem der Ansprüche 6 oder 7 wobei der Druck, der durch die Laminierungswalzen (20) ausgeübt wird, im Bereich von 2 MPa bis 6 MPa liegt.

10. Auflegeverfahren nach einem der Ansprüche 1 bis 9, wobei, um mit dem Auflegen der Karkassenverstärkungs-Kordlage zu beginnen:
- die Vorderflanke (C_{AV}) der Karkassenverstärkungs-Kordlage (C) mit Hilfe einer Transporteinrichtung (40) ergriffen wird, die die Karkassenverstärkungsfasern parallel zu der axialen Richtung halten kann,
- die Vorderflanke der Kordlage auf der Trommel (D) auf Höhe einer Meridianlinie, die im Wesentlichen der Kontaktzone zwischen der Druckwalze (10) und der ersten Auflegeoberfläche entspricht, angeordnet wird,
- dann die Druckwalze (10) auf die Auflegeoberfläche abgesenkt wird, nachdem die Transporteinrichtung zurückgezogen worden ist.

11. Auflegeverfahren nach einem der Ansprüche 1 bis 9, wobei, um das Auflegen der Karkassenverstärkungs-Kordlage abzuschließen:
- die Hinterflanke (C_{AR}) der Karkassenverstärkungs-Kordlage (C) mit Hilfe einer Transporteinrichtung ergriffen wird, die die Karkassenverstärkungsfasern parallel zu der axialen Richtung halten kann und deren Lineargeschwindigkeit im Wesentlichen gleich der bei dem ersten Umfang gemessenen Umfangsgeschwindigkeit ist,
- die Hinterflanke (C_{AR}) der Kordlage auf der Trommel (D) auf Höhe der Meridianlinie, die im Wesentlichen den Kontaktherstellungspunkten zwischen der Kordlage und dem Rücken der Profile (P) entspricht, angeordnet wird,
- die Hinterflanke (C_{AR}) und die Vorderflanke (C_{AV}) der Kordlage unter der Druckwalze (10) hindurchbewegt werden, um das Aneinanderstoßen der zwei Kordlagenflanken zu bewerkstelligen.
